# EUROPÄISCHE PATENTSCHRIFT

(11) **EP 0 579 793 B1**
(45) Veröffentlichungstag und Bekanntmachung des Hinweises auf die Patenterteilung: **12.07.1995**
(21) Anmeldenummer: 93901614.3
(22) Anmeldetag: 19.01.1993
(51) Int. Cl.: A23L 2/72, A23L 2/74

(54) **VERFAHREN ZUR HERSTELLUNG EINES ZUCKERREDUZIERTEN, ALKOHOLFREIEN GETRÄNKES**
METHOD OF MANUFACTURING A NON-ALCOHOLIC DRINK WITH A REDUCED SUGAR CONTENT
PROCEDE DE PREPARATION D'UNE BOISSON SANS ALCOOL A TENEUR EN SUCRE REDUITE

(30) Priorität: 29.01.1992 CH 246/92
(43) Veröffentlichungstag der Anmeldung: 26.01.1994
(73) Patentinhaber: BUCHER-GUYER AG Maschinenfabrik, CH-8166 Niederweningen (CH)
(72) Erfinder: GRESCH, Walter, CH-8166 Niederweningen (DE)
(86) Internationale Anmeldenummer: CH9300007
(87) Internationale Veröffentlichungsnummer: WO9314650

(56) Entgegenhaltungen:
- EP-A- 0 382 010
- EP-A- 0 440 975
- WO-A-89/03240
- WO-A-89/07132
- WO-A-89/10703
- WO-A-91/05847
- CH-A- 632 137

## Beschreibung

Die Erfindung betrifft ein Verfahren zur Herstellung eines zuckerreduzierten, alkoholfreien Getränkes, insbesonders Fruchtsaft aus süssen Säften von pflanzlichen Produkten, insbesonders Obst, Trauben, Beeren und anderen Früchten, wobei der Rohsaft einem Entzuckerungsverfahren zugeführt wird.

Durch die WO 89/10703 ist ein physikalisches Verfahren zur Entzuckerung von Getränken bekannt geworden, bei dem in einer Membrantrennanlage durch entsprechende Wahl der Membran der Zucker aus dem Rohsaft entfernt wird. Die nach der Entfernung des Zuckers im Retentat oder im Permeat übrig gebliebenen Stoffe werden wieder zum Prozess oder zum Endprodukt zurückgeführt.

Mit diesem Verfahren wird bereits eine hohe Selektivität und auch eine Qualitätsverbesserung erreicht. Es werden jedoch insbesonders für die niedermolekularen Komponenten wie Säuren, Mineralien etc. zum Teil die RSK-Werte für normale Säfte noch nicht ganz erreicht. Die Folge davon ist ein vermindertes Geschmackserlebnis und eine niedrigere Einstufung im Rahmen der gesetzlichen Zulassung des Getränkes, was letztlich zu einer Wertminderung führt.

Ferner sind nichtphysikalische Entzuckerungsverfahren bekannt geworden ( z.B. CH-PS 632 137 und EP-OS 0382010), bei denen der in der Ausgangsflüssigkeit enthaltene Zucker durch die Einwirkung von Enzymen oder Mikroorganismen teilweise oder vollständig abgebaut wird. Bei diesen bekannten, fermentativen bzw. mikrobiologischen Entzuckerungsverfahren entstehen im Getränk nicht-arttypische Nebenprodukte aus Nebenreaktionen, die den ursprünglichen Charakter des Getränkes verfälschen. Es ist deshalb wünschenswert, diese Wirkung zu vermindern. Ausserdem sind auch diese bekannten Verfahren relativ teuer, da biologische bzw. fermentative Verfahren mit relativ kleinen Raum-Zeit-Ausbeuten arbeiten, was relativ grosse Apparaturen erfordert.

Der Erfindung liegt deshalb die Aufgabe zugrunde, ein Verfahren der eingangs erwähnten Art zu schaffen, mit dem eine weitere Verbesserung der Produktqualität bei relativ niedrigen Herstellungskosten erreicht wird.

Gemäss der Erfindung wird diese Aufgabe dadurch gelöst, dass der Rohsaft vor dem Entzuckerungsverfahren durch eine Vorabtrennung in zwei Ströme geteilt wird, von denen der eine Strom gegenüber dem Rohsaft ein niedrigeres Säure/Zucker-Verhältnis und einen höheren Zuckergehalt und der andere Strom ein erhöhtes Säure/Zucker-Verhältnis und einen niedrigeren Zuckergehalt aufweist, und dass der erste Stroh dem Entzuckerungsverfahren und der zweite Strom dem zuckerreduzierten Saft nach der Entzuckerung zugeführt wird.

Weitere Ausgestaltungen und Merkmale der Erfindung sind den Patentansprüchen zu entnehmen.

Die Erfindung ist in der folgenden Beschreibung und der Zeichnung, die mehrere Ausführungsbeispieie darstellt, näher erläutert. Es zeigen
- Fig. 1: eine schematische Darstellung eines Entzuckerungsverfahrens mit vorgeschalteter Vorabtrennung,
- Fig. 2: die Vorabtrennung nach Fig. 1 kombiniert mit einem Dialyseverfahren für die Entzuckerung und
- Fig. 3: die Vorabtrennung nach Fig. 1 kombiniert mit einem Nanofiltrationsverfahren für die Entzuckerung.

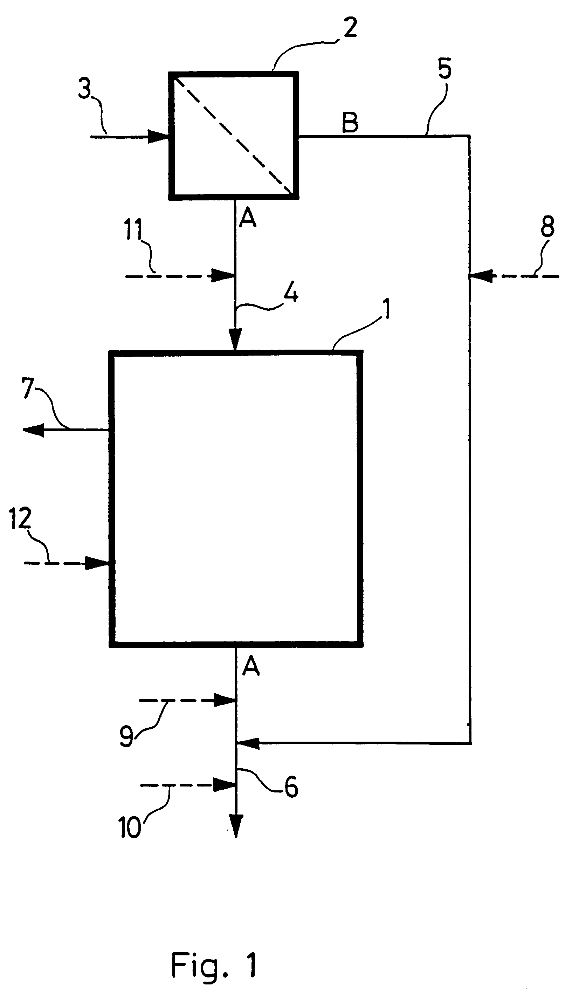

Das in Fig. 1 schematisch und ohne interne Kreisläufe dargestellte Verfahren besteht aus einem bekannten, beliebigen Entzuckerungsverfahren 1, dem eine Vorabtrennung 2 vorgeschaltet ist. Über eine Zuführleitung 3 wird der aus pflanzlichen Produkten wie Obst, Trauben, Beeren und anderen Früchten gewonnene süsse Rohsaft in die Vorabtrennung 2 eingeleitet. Als Verfahren für die Vorabtrennung 2 eignen sich unter anderem gewisse Membranverfahren, insbesonders Nanofiltration, Dialyse sowie Sorbtions-Verfahren. Besonders geeignet ist ein Nanofiltrations-Verfahren, das mit einer Membrane von 5 bis 20 % NaCl-Rückhalt arbeitet, gemessen bei 3500 ppm NaCl, 40 bar und 25° C.

In der Vorabtrennung 2 wird der Rohsaft in zwei Ströme aufgeteilt, von denen der retentatseitige Strom A über eine Leitung 4 direkt dem Entzuckerungsverfahren 1 zugeführt wird. Gegenüber dem Ausgangs-Rohsaft besitzt der Strom A ein niedrigeres Säure/Zucker-Verhältnis und einen höheren Zuckergehalt. Der permeatseitige Strom B, der gegenüber dem Rohsaft ein erhöhtes Säure/Zucker-Verhältnis und einen niedrigeren Zuckergehalt aufweist, wird über eine Leitung 5 aus der Vorabtrennung 2 herausgeführt und nach dem Entzuckerungsverfahren 1 wieder in den Strom A zurückgeführt. Über eine Leitung 6 wird der mit dem Strom B vereinigte Strom A entweder als konzentrierter, zuckerreduzierter Saft, der später auf Trinkstärke verdünnt wird, oder als ein auf Trinkstärke im Verlauf des Verfahrens mit Wasser verdünnter, zuckerreduzierter Saft abgeführt. Der übrige, zuckerhaltige Saft verlässt über eine Leitung 7 das Entzuckerungsverfahren 1 als Zuckersaft.

Der Rohsaft wird vorzugsweise in konzentrierter Form in die Vorabtrennung 2 eingeleitet. Ein gegenüber normaler Trinkstärke konzentrierterer Saft wird vorteilhafterweise deshalb verwendet, damit sich die gewünschten Eigenschaften bezüglich Säure/Zucker-Verhältnis und Zuckergehalt bilden können. Als konzentrierter Rohsaft wird ein trüber oder klarer Saft verstanden, dessen Zuckerkonzentration, z.B. gemessen in °Bx, wenigstens 10% , vorzugsweise gleich oder grösser ca. + 30° Bx, über der normalen Trinkstärke, z.B. 11,8° Bx bei Apfelsaft, liegt. Im Ausführungsbeispiel beträgt die Rohsaft-Konzentration bei 100 Teilen ca. 20° Bx und ca. 9,5 g/l Säure.

Aufgrund der Unterschiede im Säure/Zucker-Verhältnis zwischen den Strömen A und B sind im Strom B automatisch relativ zum Zuckergehalt niedermolekulare Komponenten, z.B. neben Säure auch Mineralien mit angereichert. Aufgrund dessen ist es möglich, je nach Wahl des Verfahrens für die Vorabtrennung 2 vom Rohsaft-Konzentrat einen Strom B abzutrennen, der nach Verdünnung mittels Wasser auf den Zuckergehalt des Stromes A bzw. des zuckerreduzierten Saftes die niedermolekularen Anteile ausser Zucker innerhalb den RSK-Werten enthält. Dadurch wird das Endprodukt, d.h. der zuckerreduzierte Saft zunehmend mit dem Mengenverhältnis von Strom B zu Strom A hinsichtlich Gehalt an niedermolekularen Anteilen (ohne Zucker) qualitativ verbessert, was das Qualitätsproblem z.B. bei den eingangs erwähnten, bekannten physikalischen Entzuckerungsverfahren löst. Aber auch bei den bekannten nichtphysikalischen Verfahren wird durch die erfindungsgemässe Vorabtrennung das Problem der geschmacklichen Beeinflussung durch Nebenprodukte mit Zunahme des Mengenverhältnisses von Strom B zu Strom A verbessert.

Im Ausführungsbeispiel nach Fig. 1 wird für die Vorabtrennung 2 ein Nanofiltrationsverfahren mit einer Membrane von ca 10% NaCl-Rückhalt verwendet. Der permeatseitige Strom B verlässt mit ca. 50 Teilen, ca. 15° Bx und 11 g/l Säure über die Leitung 5 die Vorabtrennung 2. Ausgehend von einem Rohsaft mit ca. 20° Bx und ca. 9,5 g/l Säuregehalt wird ein Permeatstrom erzielt, der nach Rückverdünnung mit Wasser von 15° Bx auf die zuckerreduzierte Trinkstärke von ca. 7,5° Bx einen gleichen Säuregehalt aufweist wie der auf normale Trinkstärke von ca. 11,5° Bx rückverdünnte Rohsaft. Analog verhalten sich auch die Mineralstoffe und andere niedermolekulare Anteile. Da hier der Anteil vom Strom B ab Vorabtrennung relativ hoch ist (ca. 50 Teile), werden für die Produktqualität wichtige Vorteile erzielt. Zum einen weist ca. die Hälfte des Ausgangssaftes ungefähr den vollen Gehalt an Sauren und auch anderen, niedermolekularen Komponenten auf und kann deshalb, vermischt mit dem Strom A, den Gesamtgehalt des Endprodukts erhöhen. Dadurch wird eine Qualitätsverbesserung erzielt, wobei die durch das Mischen gebildeten Mittelwerte innerhalb der RSK-Werte liegen, wenn auch z.B. der Gehalt an diesen Komponenten im Strom A unterhalb des RSK-Wertes liegt. Zum anderen sinkt durch die Anreicherung der genannten niedermolekularen Anteile im Strom B deren Konzentration im Strom A, der das Entzuckerungsverfahren 1 durchläuft. Aufgrundessen geht insbesonders bei Anwendung von Membranverfahren für die Entzuckerung während der Entzuckerung weniger verloren. Dieser Effekt bringt somit eine weitere Verbesserung des Endprodukts.

Im Ausführungsbeispiel nach Fig. 1 wird das zur Verdünnung des Stromes B erforderliche Wasser mit ca 25 Teilen über eine Leitung 8 in die Leitung 5 eingeleitet und damit dem Strom B zugeführt. Der auf diese Weise verdünnte Strom B gelangt dann mit ca 75 Teilen, einer Zuckerkonzentration von ca. 7,5° Bx und einem Säuregehalt von ca. 5,5 g/l in die Leitung 6 bzw. in den Strom A und vermischt sich dort mit dem zuckerreduzierten Saft, der das Entzuckerungsverfahren 1 nach erfolgter Entzuckerung verlassen hat. Dem zuckerreduzierten Saft kann vor und nach der Einleitung des Stromes B in den Strom A über Leitungen 9 und 10 Wasser zugeführt werden.

Der retentatseitige Strom A verlässt über die Leitung 4 mit ca. 50 Teilen und ca. 25° Bx die Vorabtrennung 2. Über eine Leitung 11 werden ca. 45 Teile Wasser zugeführt, so dass der verdünnte Strom A beim Eintritt in das Entzuckerungsverfahren ca. 95 Teile mit einer Zuckerkonzentration von ca. 25° Bx aufweist.

Das Entzuckerungsverfahren 1 kann aus bekannten, einfachen Verfahren bestehen, wie z.B. einstufige Nano-,Umkehrosmose-, Dialyse-, Adsorber-, Fermentier-Verfahren etc. oder aus mehrstufigen Verfahren bestehen. Während der Entzuckerung kann über eine Leitung 12 dem Entzuckerungsverfahren 1 Wasser zugeführt werden. Der Betrieb des Gesamtverfahrens kann chargenweise oder kontinuierlich durchgeführt werden.

Parallel zur Qualitätsverbesserung, die mit dem erfindungsgemässen Verfahren erzielt wird, werden auch die Kosten reduziert, weil die Kosten für die Vorabtrennung 2 relativ niedrig sind und nur eine Teilmenge das relativ teure Entzuckerungsverfahren 1 zu durchlaufen hat. Da ca. 50% des Gesamtvolumens in den Strom B geht, ist das Entzuckerungsverfahren 1 nur noch auf ca. der halben Gesamtkapazität auszulegen. Wenn man ferner berücksichtigt, dass die Flux-Werte der Nanofiltration aufgrund des relativ niedrigen NaCl-Rückhaltes der Membrane relativ hoch liegen, dann entstehen im Vergleich zur direkten Entzuckerung bzw. zu den bekannten Entzuckerungsverfahren ohne die erfindungsgemässe Vorabtrennung ganz beträchtliche Kosteneinsparungen. Somit ergeben sich trotz einer qualitativen Verbesserung des Endproduktes insgesamt niedrigere Herstellkosten.

Aufgrund der Verwendung von Rohsaft mit erhöhter Konzentration lassen sich auch mit Vorabtrennverfahren, bei denen der Stofftransport durch Diffusion erfolgt, interessante Leistungen erzielen. Wird dür die Vorabtrennung 2 ein Dialyse- oder Sorbtionsverfahren eingesetzt, so wird vorzugsweise wenigstens das für die Verdünnung des Stromes B vorgesehene Wasser als Spülwasser für den Strom B verwendet (Dyalisatseite bei Dialyse).

Falls Wert darauf gelegt wird, dass der zuckerreduzierte Saft frei von Nebenprodukten ist, dann wird für das Entzuckerungsverfahren 1 vorzugsweise ein Verfahren gemäss der WO-89/10703 verwendet, bei dem der Verlust an höhermolekularen Komponenten sehr gering ist. Das umgekehrte ist für niedermolekulare Stoffe bei der Vorabtrennung der Fall, insbesonders wenn für die Vorabtrennung 2 ein Nanofiltrationsverfahren eingesetzt wird. Die positiven Effekte beider Verfahren ergänzen sich synergistisch, so dass sich damit sehr hochqualitative zuckerreduzierte Säfte herstellen lassen.

Wenn als Ausgangsflüssigkeit Rohsaft-Konzentrat verwendet wird, so ist der Saft während des Verfahrensablaufes oder auch später im Normalfall ca. so weit mit Getränke-Wasser zu verdünnen, wie zur Herstellung von Getränken mit Trinkstärke entsprechendem Zuckergehalt, abzüglich durch das Entzuckerungsverfahren entzogenem Zucker,erforderlich ist. Wie im Ausführungsbeispiel nach Fig. 1 dargestellt und beschrieben, ist im Prinzip die Zuführung von Verdünnungswasser an einer beliebigen Stelle nach der Vorabtrennung 2 möglich. Aus qualitativen Gründen ist es aber je nach Entzuckerungsverfahren von Vorteil, wenn die Eingangskozentration für das Entzuckerungsverfahren 1 nicht zu hoch liegt. Deshalb kann wenigstens ein Teil des Verdünnungswassers mit ca. 45 Teilen über die Leitung 11 in den Strom A vor Eintritt in das Entzuckerungsverfahren 1 zugefügt werden.

Dem Strom B wird nur ca. so viel Wasser zugefügt, dass der Zuckergehalt nach der Verdünnung dem Zuckergehalt des zuckerreduzierten Saftes entspricht. Im Ausführungsbeispiel werden dem Strom B über die Leitung 8 ca. 25 Teile Wasser zugegeben. Diese Wassermenge lässt sich aber auch zusätzlich zum übrigen Verdünnungswasser dem Strom A vor, innerhalb oder nach dem Entzuckerungsverfahren 1 zufügen.

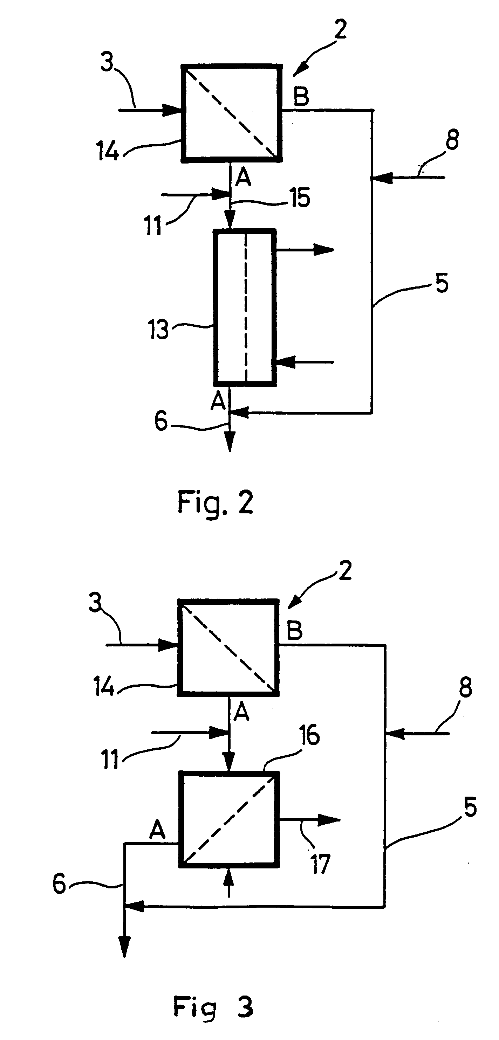

Durch die Kombination des erfindungsgemässen Vorabtrenn- und Rückführ-Systems mit relativ einfachen, aber kostengünstigen Entzuckerungsverfahren lassen sich auch kostengünstige Gesamtverfahren realisieren, die sich zur billigen Herstellung von zuckerreduzierten Säften eignen. Diese zuckerreduzierten Säfte sind den üblichen Leicht-Fruchtsaft-Getränken, die durch Verdünnen von Fruchtsäften mit Wasser hergestellt werden, qualitativ noch stark überlegen. Im Ausführungsbeispiel nach Fig. 2 ist ein solches System dargestellt, das aus einer Kombination der Vorrabtrennung 2 mit einem einfachen Dialyseverfahren 13 besteht. die Retentatseite der Vorabtrennung 2, die durch eine Nanofiltration 14 gebildet wird, ist über eine Leitung 15 mit dem Dialyseverfahren 13 verbunden. Mit einer Wasserspülung auf der Dialyseseite des Dialyseverfahrens 13 erfolgt die Entzuckerung des Retentatstromes (Strom A), der über die Leitung 15 in das Dialyseverfahren 13 eingebracht wird. Vorzugsweise wird dabei die Trenngrenze der Dialysemembrane kleiner als bei üblichen industriellen Modulen gewählt, z.B. unter 5000 D, um höhermolekulare Anteile besser zurückzuhalten. Ebenfalls ist es von Vorteil, die Membrane z.B. jonisch so zu pfropfen, dass der Säuredurchgang gehemmt wird.

Der permeatseitige Strom B der Nanofiltration 14 (Stufe I) wird über die Leitung 5 wie im Ausführungsbeispiel gemäss Fig. 1 nach der Entzuckerung bzw. nach dem Dialyseverfahren 13 (Stufe II) wieder in den Strom A zurückgeführt, der als zuckerreduzierter Saft über die Leitung 6 abgeführt wird. Die Zugabe von Verdünnungswasser in den Strom A bzw. B kann wie im Ausführungsbeispiel nach Fig. 1 über die Leitungen 11 bzw. 8 erfolgen.

Ein weiteres Ausführungsbeispiel der Erfindung ist in Fig. 3 dargestellt. Es handelt sich ebenfalls um ein Niedrigkosten-Gesamtverfahren, bei dem die Vorabtrennung 2, die wie im Ausführungsbeispiel nach Fig. 1 und 2 aus einer Nanofiltration 14 besteht, mit einer weiteren Nanofiltration 16 als Entzuckerungsverfahren kombiniert wird. Die Nanofiltration 16 weist im Vergleich zur Vorabtrennung 2 eine kleinere Trenngrenze auf, z.B. 30 - 60 % Salz-Rückhalt bei 3500 ppm NaCl, 40 bar, 25°C. Um das Wasser, das mit dem Permeat weggeht, wieder im Fruchtsaft zu ersetzen, wird die zweite Nanofiltration 16 zweckmässigerweise im Diafiltrations-Betrieb betrieben. Aufgrunddessen lässt sich der Gehalt an übrigen Stoffen (ausser Zucker) im Permeat vermindern.

Zur Verdünnung des Stromes A wird diesem über die Leitung 11 Verdünnungs- und Diafiltrationswasser zugeführt. Dem Strom B kann in gleicher Weise wie bei den Ausführungsbeispielen nach Fig. 1 und 2 über die Leitung 8 Verdünnungswasser zugegeben werden. Das Zucker enthaltende Permeat der Nanofiltration 16 (Stufe II) wird über eine Leitung 17 abgeführt, während der Strom A als Retentat die Nanofiltration 16 verlässt und nach Rückführung des Stromes B durch die Leitung 5 in den Strom A als zuckerreduzierter Saft über die Leitung 6 abgeführt wird.

In beiden Fällen (Ausführungsbeispiel nach Fig. 1 und 2) ist es im allgemeinen sinnvoll, schon vor der Stufe II (Dialyseverfahren 13, Nanofiltration 16) Verdünnungswasser dem Strom A zuzugeben, um Verluste von Wertstoffen, ausser Zucker, in der Stufe II zu vermindern, Wenn aber die Qualität vor den Kosten zurücktreten muss, dann wird es besser sein, mit möglichst hoher Konzentration an Zucker in die Stufe II zu gehen, um die spezifische Leistung dieser Stufe zu verbessern. In diesem Falle würde die Wasser-Zugabe erst nach der Stufe II erfolgen.

In weiterer Ausgestaltung der Erfindung kann das erfindungsgemässe Verfahren auch mit Vorteil zur Herstellung alkoholreduzierter, fermentierter Getränke eingesetzt werden. Dabei werden als Ausgangsprodukt ebenfalls süsse Säfte aus pflanzlichen Produkten, insbesonders Obst, Trauben, Beeren und anderen Früchten verwendet. Der heute übliche Weg zur Herstellung solcher Getränke ist die alkoholische Fermentation der süssen Säfte zu Wein und der Entzug von Alkohol aus dem Wein mittels physikalischer Verfahren, insbesonders thermische Verfahren und Membranverfahren.

Das Problem bei den bekannten Verfahren besteht darin, dass infolge des relativ leicht flüchtigen Alkohols bei dessen Entfernung auch mehr oder weniger andere für die Aromabildung wichtige, leichtflüchtige Stoffe durch das sogenannte "Mitreissen" mitentfernt werden, was zur Beeinträchtigung des Aromas führt.

Zur Lösung dieses Problems ist es grundsätzlich allgemein möglich, zuerst den Rohstoff zu entzuckern, respective dessen Zuckergehalt insbesonders mit physikalischen Methoden zu reduzieren una anschliessend diesen zuckerreduzierten Saft alkoholisch zu vergären. Auf diesem Wege ist es z.B. möglich, ausgehend von Traubensaft, der auf dem üblichen Wege zu einem Wein mit 10% Alkohol führt, einen Leichtwein von hoher Aromaqualität mit 5 - 6% Alkohol mittels einer normalen, vollen Gärung herzustellen. Nachträglich ist es immer noch möglich, dieses neue Ausgangsprodukt auf 2 und weniger Alkoholprozente wie üblich zu entalkoholisieren. Der Verlust an Aromastoffe ist dann geringer als bei einer von 10% Alkohol ausgehenden Entalkoholisierung.

Für einen solchen Herstellungsprozess ist das erfindungsgemässe Gesamtverfahren innerhalb der bekannten Verfahren zur Entzuckerung besonders gut geeignet. Dies ist darin begründet, dass aufgrund der erfindungsgemässen Vorabtrennung anschliessend an die Entzuckerung ein Zwischenprodukt vor der Vergärung erzielt wird, das besonders reich ist an niedrigmolekularen Anteilen, darunter auch Aromastoffe. Dabei ist es wichtig, den gesamten Prozess kalt, d.h. bei weniger als ca. 25° zu fahren, um Temperaturschädigungen zu vermeiden.

Da bei Anwendung des erfindungsgemässen Verfahrens der Verlust an Aromastoffen relativ gering ist, kann auf die übliche, thermische Entaromatisierung vor dem Gesamtprozess und das nachträgliche Zuführen der entzogenen Aromastoffe mit Vorteil für die Aromaqualität, die bei der thermischen Entaromatisierung leidet, verzichtet werden.

Als Ausgangsmaterial kommt sowohl Konzentrat als auch Single-Strength-Saft in Betracht. Das Konzentrat wird vorzugsweise kalt, z.B. via Konzentrierung durch Umkehrosmose ohne vorherige Abtrennung hergestellt.

Anstelle der Kombination eines Entzuckerungs- Gesamtverfahrens mit nachfolgendem Entalkoholisierungs-Verfahren, das eingesetzt wird um auf niedrige Alkoholgehalte von z.B. weniger als 2% Vol. zu kommen, ist auch die Kombination des erfindungsgemässen Gesamt-Entzuckerungsverfahrens mit einem Fermentierverfahren sinnvoll, das eine gegenüber normalen Fermentierverfahren verminderte Alkoholmenge entstehen lässt. Hierzu eigenen sich bekannte Fermentierverfahren, z.B. gemäss DE-OS 4 003 404. Dadurch werden folgende Vorteile erzielt:

Es wird eine qualitative Verbesserung erreicht, weil von einem Rohstoff mit reduziertem Zuckergehalt, aber im übrigen mit einem qualitativ hochwertigem Saft als Rohmaterial für die Fermentierung ausgegangen wird. Ausserdem wird eine erhebliche Einsparung bei der Fermentationszeit erzielt. Analog zur Herstellung von Bier sind dadurch mittels immobilisierter Hefen in Bio-Reaktoren kontinuierliche Verfahren realisierbar, was zur drastischen Reduktion der Herstellkosten solcher Getränke führt. Dieses Prinzip ist auch für eine volle Gärung aufgrund des niedrigen Zuckergehalts im Rohstoff vor dem Fermenter anwendbar, z.B. durch Kombination des erfindungsgemässen Verfahrens mit einer Getränke-Fermentation gemäss WO 89/07132.

## Patentansprüche

1. Verfahren zur Herstellung eines zuckerreduzierten, alkoholfreien Getränkes, insbesonders Fruchtsaft aus süssen Säften von pflanzlichen Produkten, insbesonders Obst, Trauben, Beeren und anderen Früchten, wobei der Rohsaft einem Entzuckerungsverfahren zugeführt wird, dadurch gekennzeichnet, dass der Rohsaft vor dem Entzuckerungsverfahren (1) durch eine Vorabtrennung (2) in zwei Ströme (A, B) geteilt wird, von denen der eine Strom (A) gegenüber dem Rohsaft ein niedrigeres Säure/Zucker-Verhältnis und einen höheren Zuckergehalt und der andere Strom (B) ein erhöhtes Säure/Zucker-Verhältnis und einen niedrigeren Zuckergehalt aufweist, und dass der Strom (A) dem Entzuckerungsverfahren (1) und der Strom (B) dem zuckerreduzierten Saft nach der Entzuckerung zugeführt wird.

2. Verfahren nach Anspruch 1, dadurch gekennzeichnet, dass der Strom (B) durch Zuführung von Verdünnungswasser auf einen Zuckergehalt gebracht wird, der ungefähr dem Zuckergehalt des Stromes (A) nach Durchlaufen des Entzuckerungsverfahrens (1) entspricht.

3. Verfahren nach Anspruch 1 oder 2, dadurch gekennzeichnet, dass wenigstens ein Teil des Verdünnungswassers in den Strom (A) vor Eintritt in das Entzuckerungsverfahren (1) eingeführt wird.

4. Verfahren nach einem der Ansprüche 1 bis 3, dadurch gekennzeichnet, dass als Ausgangsprodukt konzentrierter Rohsaft verwendet wird, dessen Konzentration vorzugsweise bei gleich oder grösser als ca. 20° Bx liegt.

5. Verfahren nach Anspruch 5, dadurch gekennzeichnet, dass für die Vorabtrennung (2) Membranverfahren, insbesonders Nanofiltrations-, Dialyse- oder Sorptionsverfahren eingesetzt werden.

6. Verfahren nach Anspruch 5, dadurch gekennzeichnet, dass für die Vorabtrennung (2) ein Nanofiltrations- Verfahren mit einer Membrane von 5 bis 20 % NaCl- Rückhalt, gemessen bei 3500 ppm NaCl bei 40 bar und 25°C, eingesetzt wird.

7. Verfahren nach einem der Ansprüche 1 bis 6, dadurch gekennzeichnet, dass bei Verwendung von Dialyse- und Sorptions- Verfahren für die Vorabtrennung (2) vorzugsweise wenigstens das für die Verdünung des Stromes (B) vorgesehene Wasser als Spülwasser für die Dialyse verwendet wird (Dialysatseite bei Dialyse).

8. Verfahren nach einem der Ansprüche 1 bis 7, dadurch gekennzeichnet, dass für das Entzuckerungsverfahren (1) ein an sich bekanntes Verfahren, bei dem in einer Membrankennanlage durch entsprechende Wahl der Membran der Zucker entfernt wird, eingesetzt wird.

9. Verfahren nach einem der Ansprüche 1 bis 8, dadurch gekennzeichnet, dass die Vorabtrennung (2) einschliesslich Rückführungssystem mit einem einfachen Dialyseverfahren (13) mit Wasserspülung auf der Dialysatseite zur Entzuckerung des Retentatstromes kombiniert wird.

10. Verfahren nach einem der Ansprache 1 bis 8, dadurch gekennzeichnet, dass die aus einer Nanofiltration (14) bestehende Vorabtrennung (2) mit einer weiteren Nanofiltration (16) für die Entzuckerung kombiniert wird, die im Vergleich zur ersten Nanofiltration (14) eine kleinere Trenngrenze, z.B. 30 - 60% Salz-Rückhalt (bei 3500 ppm NaCl, 40 bar, 25°C) aufweist.

11. Verfahren nach einem der Ansprüche 1 bis 10, dadurch gekennzeichnet, dass es zur Herstellung alkoholreduzierter, fermentierter Getränke eingesetzt wird.

12. Verfahren nach einem der Ansprüche 1 bis 11, dadurch gekennzeichnet, dass es mit einem Fermentierverfahren kombiniert wird, das eine gegenüber normalen Fermentierverfahren verminderte Alkoholmenge entstehen lässt.

13. Verfahren nach einem der Ansprüche 1 bis 12, dadurch gekennzeichnet, dass es mit einem Getränke-Fermentierverfahren kombiniert wird.

14. Verfahren nach einem der Ansprüche 1 bis 13, dadurch gekennzeichnet, dass der gesamte Prozess kalt, d.h. bei weniger als ca. 25°C gefahren wird.

## Claims

1. Method of manufacturing a non-alcoholic drink with a reduced sugar content, in particular fruit juice, from sweet juices of vegetable products, in particular fruit, grapes, berries and other fruits, the raw juice being fed to a sugar-removal procedure, characterised in that, prior to the sugar-removal procedure (1), the raw juice is divided into two streams (A, B) by a preliminary separation procedure (2), one stream (A) having a lower acid/sugar ratio and a higher sugar content than the raw juice and the other stream (B) having a higher acid/sugar ratio and a lower sugar content than the raw juice, and that stream (A) is fed to the sugar-removal procedure (1) and stream (B) to the sugar-reduced juice after the removal of sugar.

2. Method according to claim 1, characterised in that dilution water is fed to stream (B) in order to bring it to a sugar content corresponding approximately to the sugar content of stream (A) after it has undergone the sugar-removal procedure (1).

3. Method according to claim 1 or claim 2, characterised in that at least some of the dilution water is introduced into stream (A) before it enters the sugar-removal procedure (1).

4. Method according to one of claims 1 to 3, characterised in that concentrated raw juice, the concentration of which is preferably greater than or equal to approximately 20° Bx, is used as the starting product.

5. Method according to claim 5, characterised in that membrane processes, in particular nanofiltration, dialysis or sorption processes, are used for the preliminary separation procedure (2).

6. Method according to claim 5, characterised in that a nanofiltration process with a membrane with 5 to 20 % NaCl rejection, as measured at 3500 ppm NaCl at 40 bar and 25°C, is used for the preliminary separation procedure (2).

7. Method according to one of claims 1 to 6, characterised in that, when using dialysis and sorption processes for the preliminary separation procedure (2), preferably at least the water provided for diluting stream (B) is used as flushing water for the dialysis (dialysate side in dialysis).

8. Method according to one of claims 1 to 7, characterised in that a process known per se, in which the sugar is removed in a membrane separation plant by appropriate selection of the membrane, is used for the sugar-removal procedure (1).

9. Method according to one of claims 1 to 8, characterised in that the preliminary separation procedure (2) including the recycling system is combined with a simple dialysis process (13) with water flushing on the dialysate side for removing sugar from the retentate stream.

10. Method according to one of claims 1 to 8, characterised in that the preliminary separation procedure (2) consisting of a nanofiltration process (14) is combined with a further nanofiltration process (16) for the removal of sugar, having a lower cut-off, e.g. 30 - 60 % salt rejection (at 3500 ppm NaCl, 40 bar, 25°C) than the first nanofiltration process (14).

11. Method according to one of claims 1 to 10, characterised in that it is used for the manufacture of fermented drinks with a reduced alcohol content.

12. Method according to one of claims 1 to 11, characterised in that it is combined with a fermentation process allowing for a lower quantity of alcohol than normal fermentation processes.

13. Method according to one of claims 1 to 12, characterised in that it is combined with a beverage fermentation process.

14. Method according to one of claims 1 to 13, characterised in that the entire process is carried out cold, i.e. at a temperature of less than approximately 25°C.

## Revendications

1. Procédé de préparation d'une boisson sans alcool à teneur en sucre réduite, notamment un jus de fruits constitué de jus sucrés de produits végétaux, notamment des fruits du verger, des raisins, des baies et autres fruits, le jus brut étant soumis à un processus d'extraction du sucre, **caractérisé** en ce qu'avant le processus d'extraction du sucre (1), le jus brut est divisé par une séparation préalable (2) en deux flux (A, B), le flux (A) présentant, par rapport au jus brut, un rapport acides/sucre inférieur et une teneur en sucre supérieure, et le flux (B) un rapport acides/sucre supérieur et une teneur en sucre inférieure, et en ce que le flux (A) est soumis au processus d'extraction du sucre (1), tandis que le flux (B) est apporté au jus à teneur en sucre réduite après l'extraction du sucre.

2. Procédé selon la revendication 1, **caractérisé** en ce que le flux (B) est, par apport d'eau de dilution, amené à une teneur en sucre qui correspond approximativement à la teneur en sucre du flux (A) après le processus d'extraction du sucre (1).

3. Procédé selon la revendication 1 ou 2, **caractérisé** en ce qu'au moins une partie de l'eau de dilution est introduite dans le flux (A) avant l'entrée dans le processus d'extraction du sucre (1).

4. Procédé selon l'une des revendications 1 à 3, **caractérisé** en ce qu'on utilise comme produit de départ du jus brut concentré dont la concentration est de préférence supérieure ou égale à environ 20° Bx.

5. Procédé selon la revendication 4, **caractérisé** en ce qu'on utilise pour la séparation préalable (2) des processus à membrane, notamment des processus de nanofiltration, de dialyse ou de sorption.

6. Procédé selon la revendication 5, **caractérisé** en ce qu'on utilise pour la séparation préalable (2) un processus de nanofiltration avec une membrane de 5 à 20 % de rétention de NaCl, mesurée pour 3500 ppm de NaCl à 40 bars et 25 °C.

7. Procédé selon l'une des revendications 1 à 6, **caractérisé** en ce qu'en cas d'utilisation de processus de dialyse ou de sorption pour la séparation préalable (2), on utilise de préférence au moins l'eau prévue pour la dilution du flux (B) comme eau de rinçage pour la dialyse (côté dialysat lors de la dialyse).

8. Procédé selon l'une des revendications 1 à 7, **caractérisé** en ce qu'on utilise pour le processus d'extraction du sucre (1) un processus en soi connu selon lequel le sucre est extrait dans une installation séparatrice à membrane par un choix correspondant de la membrane.

9. Procédé selon l'une des revendications 1 à 8, **caractérisé** en ce que la séparation préalable (2), y compris le système de réunion des flux, est combinée à un simple processus de dialyse (13) avec rinçage à l'eau du côté du dialysat pour extraire le sucre du flux de rétentat.

10. Procédé selon l'une des revendications 1 à 8, **caractérisé** en ce que la séparation préalable (2) consistant en une nanofiltration (14) est combinée à une nanofiltration supplémentaire (16) pour l'extraction du sucre qui, comparée à la première nanofiltration (14), présente une limite de séparation inférieure, par exemple 30 à 60 % de rétention des sels (pour 3500 ppm de NaCl à 40 bars et 25 °C).

11. Procédé selon l'une des revendications 1 à 10, **caractérisé** en ce qu'il est utilisé pour la préparation de boissons fermentées à teneur en alcool réduite.

12. Procédé selon l'une des revendications 1 à 11, **caractérisé** en ce qu'il est combiné à un procédé de fermentation qui produit une quantité d'alcool réduite par rapport à des procédés normaux de fermentation.

13. Procédé selon l'une des revendications 1 à 12, **caractérisé** en ce qu'il est combiné à un procédé de fermentation de boissons.

14. Procédé selon l'une des revendications 1 à 13, **caractérisé** en ce que l'ensemble du processus se déroule à froid, c'est-à-dire à une température inférieure à environ 25 °C.
